# EUROPÄISCHE PATENTSCHRIFT

(11) **EP 3 084 742 B1**
(45) Veröffentlichungstag und Bekanntmachung des Hinweises auf die Patenterteilung: **07.08.2019**
(21) Anmeldenummer: 14824457.7
(22) Anmeldetag: 18.12.2014
(51) Int. Cl.: G08C 17/02

(54) **TRAGBARE BEDIENVORRICHTUNG ZUR FERNSTEUERUNG EINER MEHRZAHL VON HAUSHALTSGERÄTEN, SYSTEM, ENTSPRECHENDES VERFAHREN UND COMPUTERPROGRAMMPRODUKT**
PORTABLE CONTROL APPARATUS FOR REMOTE CONTROL OF A PLURALITY OF DOMESTIC APPLIANCES, SYSTEM, CORRESPONDING METHOD AND COMPUTER PROGRAM PRODUCT
DISPOSITIF PORTABLE DE COMMANDE À DISTANCE D'UNE PLURALITÉ D'APPAREILS ÉLECTROMÉNAGERS, SYSTÈME, PROCÉDÉ CORRESPONDANT ET PRODUIT LOGICIEL INFORMATIQUE

(30) Priorität: 18.12.2013 DE 102013226362
(43) Veröffentlichungstag der Anmeldung: 26.10.2016
(73) Patentinhaber: BSH Hausgeräte GmbH, 81739 München (DE)
(72) Erfinder: WINDE, Mirco, 81667 München (DE)
(86) Internationale Anmeldenummer: PCT/EP2014/078545
(87) Internationale Veröffentlichungsnummer: WO 2015/091845

(56) Entgegenhaltungen:
- WO-A1-01/71685
- US-A1- 2010 138 764

## Beschreibung

Die Erfindung betrifft eine tragbare Bedienvorrichtung zur Fernsteuerung einer Mehrzahl von Haushaltsgeräten, mit einer berührungssensitiven Anzeigeeinrichtung, mit einer mit der Anzeigeeinrichtung gekoppelten Steuereinheit zum Ansteuern der Anzeigeeinrichtung und zum Empfangen von an der berührungssensitiven Anzeigeeinrichtung durchgeführten Bedieneingaben eines Benutzers, und mit einer Kommunikationseinrichtung zur drahtlosen Kommunikation mit den Haushaltsgeräten. Die Steuereinheit ist dazu ausgelegt, die Anzeigeeinrichtung zum Anzeigen einer graphischen Benutzeroberfläche zum Bedienen der Haushaltsgeräte anzusteuern und abhängig von den über die Benutzeroberfläche durchgeführten Bedieneingaben des Benutzers Steuersignale über die Kommunikationseinrichtung an die Haushaltsgeräte zu übertragen sowie Statussignale von den Haushaltsgeräten zu empfangen und über die Benutzeroberfläche auszugeben. Die graphische Benutzeroberfläche weist eine Mehrzahl von separat auswählbaren Hausgerätebedienseiten zum Bedienen jeweils eines zugeordneten Haushaltsgeräts auf, wobei die Steuereinheit weiterhin dazu ausgelegt ist, in einem Hausgeräteauswahlmenü der Benutzeroberfläche graphische Hausgeräteobjekte anzuzeigen, welche jeweils mit einer zugeordneten der Hausgerätebedienseiten verlinkt sind, und nach Empfangen einer Bedieneingabe, über die der Benutzer eines der Hausgeräteobjekte auswählt, die dem ausgewählten Haushaltsgerät zugeordnete Hausgerätebedienseite anzuzeigen. Die Erfindung betrifft außerdem ein System, ein entsprechendes Verfahren sowie ein Computerprogrammprodukt.

Es ist bereits Stand der Technik, Haushaltsgeräte mit einer Kommunikationseinrichtung auszustatten, über welche eine drahtlose Kommunikation mit einem mobilen Kommunikationsendgerät durchgeführt werden kann. Die Datenkommunikation zwischen den Haushaltsgeräten einerseits und einem mobilen Endgerät andererseits kann direkt unter Verwendung eines drahtlosen Heimnetzwerks vorgenommen werden, wie beispielsweise eines WLAN-Netzwerks. Andererseits ist es auch möglich, die Datenkommunikation über einen Internet-Server durchzuführen. In diesem Falle können die Haushaltsgeräte beispielsweise über einen WLAN-Router mit dem Internet-Server kommunizieren.

Das Interesse richtet sich vorliegend auf eine graphische Benutzeroberfläche, welche zur Steuerung bzw. zum Bedienen der Haushaltsgeräte dient und beispielsweise auf einem mobilen Endgerät, wie zum Beispiel auf einem Smartphone oder aber einem Tablet-PC, bereitgestellt werden kann. Um eine solche graphische Benutzeroberfläche bereitzustellen, kann auf dem mobilen Endgerät eine entsprechende Applikation bzw. Anwendung (Computerprogramm) installiert und durch die Steuereinheit des mobilen Endgeräts ausgeführt werden. Auf einem Touchscreen des mobilen Endgeräts wird dann die graphische Benutzeroberfläche angezeigt, über welche der Benutzer die Haushaltsgeräte bedienen kann. Dazu werden zwischen den Haushaltsgeräten einerseits und dem mobilen Endgerät andererseits Signale übertragen: Von den Haushaltsgeräten können an das mobile Endgerät Statussignale übermittelt werden, welche Informationen über den aktuellen Betriebszustand des jeweiligen Haushaltsgeräts beinhalten. Andererseits können von dem mobilen Endgerät an die jeweiligen Haushaltsgeräte auch Steuersignale übermittelt werden, durch welche das jeweilige Haushaltsgerät angesteuert werden kann. Diese Steuersignale können beispielsweise Einstellungen für das jeweilige Haushaltsgerät beinhalten, welche dann an dem jeweiligen Haushaltsgerät vorgenommen werden. Aufgrund der Steuersignale kann ein Haushaltsgerät aber auch aus einem Standby-Modus aktiviert und wieder deaktiviert werden und/oder es kann ein Betriebsprozess des Haushaltsgeräts eingeleitet und/oder unterbrochen werden.

Eine solche graphische Benutzeroberfläche der Firma Miele ist beispielsweise unter der Bezeichnung "InfoControl Plus" bekannt.

Die Bedienung einer Vielzahl von Haushaltsgeräten mittels einer graphischen Benutzeroberfläche, die auf einem mobilen Endgerät bereitgestellt wird, hat sich bisher als relativ umständlich und aufwändig erwiesen. Es sind üblicherweise eine Vielzahl von Bedieneingaben erforderlich, um von der aktuellen Hausgerätebedienseite, welche zum Bedienen eines bestimmten Haushaltsgeräts dient, zu einer Hausgerätebedienseite eines anderen Haushaltsgeräts wechseln zu können. In der Regel muss der Benutzer hier zu dem Hauptmenü bzw. dem Hausgeräteauswahlmenü wechseln, um dann in weiteren Schritten zu der Hausgerätebedienseite des gewünschten Geräts gelangen zu können. Zum einen nimmt dies relativ viel Zeit in Anspruch, was insbesondere dann nicht toleriert werden kann, wenn zwei Haushaltsgeräte gleichzeitig bedient werden sollen, wie beispielsweise ein Herd und eine Dunstabzugshaube. Zum anderen kann es durch die sehr aufwändige und unübersichtliche Gestaltung der graphischen Benutzeroberfläche auch zu Fehlbedienungen kommen, was gegebenenfalls auch dazu führen kann, dass unerwünschte Funktionen aktiviert oder aber fehlerhafte Einstellungen an den Haushaltsgeräten vorgenommen werden.

Aus der WO 01/71685 A1 ist eine universelle Fernbedienung vorbekannt, um Hausgeräte zu steuern. Die Hausgeräte, die gerade nicht bedient werden, werden auf dieser Fernbedienung als Icon in einer Werkzeugleiste angezeigt.

Es ist Aufgabe der Erfindung, eine tragbare Bedienvorrichtung, ein Verfahren sowie ein Computerprogrammprodukt bereitzustellen, welche eine besonders benutzerfreundliche Bedienung einer Mehrzahl von Haushaltsgeräten ermöglichen und gewährleisten, dass Fehlbedienungen möglichst ausgeschlossen sind.

Diese Aufgabe wird erfindungsgemäß durch eine tragbare Bedienvorrichtung, durch ein System, durch ein Verfahren sowie durch ein Computerprogrammprodukt mit den Merkmalen gemäß den jeweiligen unabhängigen Patentansprüchen gelöst. Vorteilhafte Ausführungen der Erfindung sind Gegenstand der abhängigen Patentansprüche, der Beschreibung und der Figuren.

Eine erfindungsgemäße tragbare Bedienvorrichtung ist zur Fernsteuerung einer Mehrzahl von Haushaltsgeräten ausgebildet und umfasst eine berührungssensitive Anzeigeeinrichtung (Touchscreen), eine mit der Anzeigeeinrichtung elektrisch gekoppelte Steuereinheit zum Ansteuern der Anzeigeeinrichtung und zum Empfangen von an der berührungssensitiven Anzeigeeinrichtung durchgeführten Bedieneingaben eines Benutzers, wie auch eine Kommunikationseinrichtung zur drahtlosen Kommunikation mit den Haushaltsgeräten. Vorzugsweise umfasst die berührungssensitive Anzeigeeinrichtung eine Oberfläche mit kapazitiven Sensorelementen, die beispielweise selektiv mittels der Steuereinheit aktiviert werden können, um Benutzereingaben erfassen zu können. Zu diesem Zweck kann vorgesehen sein, dass die Steuereinheit von den kapazitiven Sensorelementen gelieferte Signale erfasst und auswertet. In Abhängigkeit eines Auswerteergebnisses und eines Aktivitätszustands des jeweiligen Sensorelements kann dann eine Benutzereingabe erfasst werden. Natürlich kann auch vorgesehen sein, dass zwei oder mehrere Sensorelemente von der Steuereinheit zu einer Sensoreinheit zusammengefasst behandelt, beispielsweise aktiviert und ausgewertet, werden.

Die Steuereinheit ist dazu ausgelegt, die Anzeigeeinrichtung zum Anzeigen einer graphischen Benutzeroberfläche zum Bedienen der Haushaltsgeräte anzusteuern und abhängig von den über die Benutzeroberfläche durchgeführten Bedieneingaben des Benutzers Steuersignale über die Kommunikationseinrichtung an die Haushaltsgeräte zu übertragen sowie auch Statussignale von den Haushaltsgeräten zu empfangen und darin enthaltene Statusinformationen über die Benutzeroberfläche auszugeben. Die graphische Benutzeroberfläche stellt eine technische Schnittstelle, insbesondere eine Mensch-Maschine-Schnittstelle, bereit, über die ein Benutzer Daten empfangen und Dateneingaben vornehmen kann. Zu diesem Zweck wird die berührungssensitive Anzeigeeinrichtung von der Steuereinheit entsprechend angesteuert. Insbesondere wird mittels der Steuereinheit auf der berührungssensitiven Anzeigeeinrichtung wenigstens ein Bereich vorgegeben, in dem Daten visuell angezeigt werden können. Vorzugsweise wird mit der graphischen Benutzeroberfläche wenigstens ein Eingabebereich der berührungssensitiven Anzeigeeinrichtung vorgegeben, bei dem eine manuelle Eingabe einer jeweiligen Steuerfunktion zugeordnet ist. Eine manuelle Eingabe in dem Bereich wird von der Steuereinheit detektiert und bewirkt dadurch die Erzeugung eines entsprechenden Steuersignals, mittels welchem die gewünschte Funktion vorzugsweise durch die Steuereinheit aktiviert werden kann. Die Bereiche, in denen Daten visuell angezeigt werden können, und die Bereiche, in denen eine manuelle Eingabe detektiert wird, können sich überlappen oder identisch sein. Die Bereiche können wenigstens teilweise entsprechend der graphischen Benutzeroberfläche von der Steuereinheit nach Bedarf geändert und/oder angepasst werden. Die graphische Benutzeroberfläche ist deshalb vorzugsweise ein Bestandteil der Steuereinheit, und zwar in Bezug auf eine Realisierung der gewünschten Steuerfunktion und der Mensch-Maschine-Schnittstelle. Entsprechend der graphischen Benutzeroberfläche kann ein Aktivieren und/oder Auswerten von Sensorsignalen der Sensorelemente beziehungsweise von Sensoreinheiten vorgesehen sein.

Die graphische Benutzeroberfläche hat eine Mehrzahl von separat voneinander auswählbaren Hausgerätebedienseiten, welche zum Bedienen jeweils eines zugeordneten Haushaltsgeräts konzipiert sind. Die Steuereinheit ist ferner dazu ausgelegt, in einem Hausgeräteauswahlmenü der Benutzeroberfläche graphische Hausgeräteobjekte anzuzeigen, welche jeweils mit einer zugeordneten der Hausgerätebedienseiten verlinkt sind, und nach Empfangen einer Bedieneingabe, über welche der Benutzer eines der Hausgeräteobjekte auswählt, die dem ausgewählten Haushaltsgerät zugeordnete Hausgerätebedienseite anzuzeigen. Erfindungsgemäß ist die Steuereinheit auch dazu ausgelegt, auf der Hausgerätebedienseite zumindest eines Haushaltsgeräts ein graphisches Geräteverlinkungsobjekt bereitzustellen und nach Empfangen einer Bedieneingabe, über die der Benutzer das Geräteverlinkungsobjekt auswählt, von der aktuell angezeigten Hausgerätebedienseite zu einer durch das ausgewählte Geräteverlinkungsobjekt definierten Hausgerätebedienseite eines anderen Haushaltsgeräts zu wechseln. Ergänzend oder alternativ kann die Steuereinheit die Anzeigeeinrichtung auch dazu ansteuern, ein solches Geräteverlinkungsobjekt auf einer Seite einer von den Haushaltsgeräten verschiedenen Themenkategorie anzuzeigen, beispielsweise auf einer Rezeptseite mit einem Kochrezeptvorschlag.

Erfindungsgemäß ist somit vorgesehen, dass auf der Hausgerätebedienseite zumindest eines Haushaltsgeräts und/oder auf einer Seite einer von den Hausgerätebedienseiten verschiedenen Themenkategorie - zum Beispiel Rezeptseiten - ein graphisches Geräteverlinkungsobjekt angezeigt wird, d.h. ein so genanntes Toast-Element. Wird dieses Geräteverlinkungsobjekt durch den Benutzer ausgewählt, so wird von der aktuell angezeigten Seite zu einer diesem Geräteverlinkungsobjekt zugeordneten Hausgerätebedienseite des zugeordneten Haushaltsgeräts gewechselt. Auf diese Art und Weise kann eine besonders benutzerfreundliche Benutzeroberfläche geschaffen werden, welche eine besonders aufwandsarme Bedienung der Haushaltsgeräte ermöglicht. So kann der Benutzer beispielsweise von der Hausgerätebedienseite einer Waschmaschine direkt zur Hausgerätebedienseite eines Wäschetrockners wechseln, wenn diese beiden Haushaltsgeräte gleichzeitig bedient werden sollen. Der Benutzer braucht somit nicht mühsam zunächst zu dem Hauptmenü oder dem Hausgeräteauswahlmenü zu wechseln, um erst dann in aufwendiger Weise die richtige bzw. gewünschte Hausgerätebedienseite öffnen zu können. Insbesondere können dadurch auch Fehlbedienungen verhindert werden, da die graphische Benutzeroberfläche sehr übersichtlich gestaltet ist und eine direkte Verlinkung zwischen bestimmten Paaren von Hausgerätebedienseiten ermöglicht. Ein Paar von Hausgerätebedienseiten braucht nicht durch lediglich zwei Hausgerätebedienseiten gebildet zu sein. Es kann auch drei oder mehrere Hausgerätebedienseiten umfassen. Vorzugsweise wird nach dem Umschalten beziehungsweise Wechseln das Geräteverlinkungsobjekt der Seite, von der umgeschaltet beziehungsweise gewechselt wurde, angezeigt. Dadurch kann ein unmittelbares erneutes Zurückschalten beziehungsweise Zurückwechseln auf die Seite, von der umgeschaltet beziehungsweise gewechselt wurde, ermöglicht werden. Wenn das Paar mehrere Hausgerätebedienseiten umfasst, kann vorgesehen sein, dass die Geräteverlinkungsobjekte der weiteren zugeordneten Hausgerätebedienseiten ebenfalls angezeigt werden. Vorzugsweise sind alle weiteren Geräteverlinkungsobjekte von Hausgerätebedienseiten, die dem Paar nicht angehören, nicht oder nur in einer übergeordneten Menüdarstellung angezeigt.

Die Kommunikation zwischen der Bedienvorrichtung einerseits und den Haushaltsgeräten andererseits kann gemäß einem vorbestimmten Kommunikationsstandard durchgeführt werden. Als Kommunikationsstandard kann zum Beispiel der WLAN-Standard verwendet werden. Die Kommunikation kann direkt oder über einen Internet-Server vorgenommen werden.

Unter einem Haushaltsgerät wird vorliegend insbesondere ein Gerät verstanden, welches zur Haushaltsführung eingesetzt wird. Dies kann insbesondere ein Haushaltsgroßgerät sein, wie beispielsweise ein Gerät zur Pflege von Wäschestücken, ein Haushaltsgerät zur Zubereitung von Lebensmitteln, beispielsweise ein Gargerät, wie zum Beispiel ein Backofen oder ein Herd, ein Haushaltsgerät zum Lagern und Konservieren von Lebensmitteln, wie ein Haushaltskältegerät, beispielsweise ein Kühlgerät oder ein Gefriergerät oder eine Kühl-Gefrierkombination, ein Klimagerät oder eine Geschirrspülmaschine. Ein Gerät zur Pflege von Wäschestücken kann dabei eine Waschmaschine, ein Wäschetrockner oder ein Waschtrockner sein. Das Haushaltsgerät kann aber auch ein Haushaltskleingerät sein, wie beispielsweise ein Kaffeevollautomat oder eine Küchenmaschine.

Vorzugsweise ist die tragbare Bedienvorrichtung als mobiles bzw. tragbares Kommunikationsendgerät ausgebildet. Unter einem tragbaren Kommunikationsendgerät wird vorliegend ein mobiles Endgerät verstanden, welches zur drahtlosen Kommunikation gemäß einem vorbestimmten Kommunikationsstandard ausgebildet ist und auf welchem neue Anwendungen bzw. Applikationen (Computerprogramme) installiert und dann ausgeführt werden können. Das tragbare Kommunikationsendgerät kann beispielsweise ein Mobiltelefon (Smartphone), ein Tablet-PC oder ein vergleichbares mobiles Endgerät sein, wie zum Beispiel ein MP3-Player mit einer entsprechenden Kommunikationseinrichtung und einer berührungssensitiven Anzeigeeinrichtung. Diese Ausführungsform macht sich dabei die Tatsache zunutze, dass heutzutage nahezu jeder über ein intelligentes Mobiltelefon mit einem Display verfügt, sodass sich der Einsatz von zusätzlichen Kommunikationsgeräten erübrigt.

Anhand von Signalen der Kommunikationseinrichtung kann die Steuereinheit auch detektieren, welche Haushaltsgeräte zum aktuellen Zeitpunkt überhaupt betriebsbereit sind. Die Kommunikation mit der tragbaren Bedienvorrichtung setzt nämlich voraus, dass sich das jeweilige Haushaltsgerät zumindest in einem Standby-Modus befindet und somit eine Betriebsbereitschaft bei diesem Haushaltsgerät besteht. Ist das Haushaltsgerät vollständig ausgeschaltet und somit von dem Versorgungsnetz getrennt, so kann die tragbare Bedienvorrichtung auch keine Kommunikationssignale von diesem Haushaltsgerät empfangen. Insbesondere ist dabei vorgesehen, dass das oben genannte Geräteverlinkungsobjekt, welches zur Hausgerätebedienseite eines Haushaltsgeräts führt, ausschließlich dann angezeigt wird, wenn dieses Haushaltsgerät auch zumindest eine Betriebsbereitschaft (Standby) aufweist und/oder aber bereits eingeschaltet ist und sich beispielsweise im Betrieb befindet.

Bevorzugt sind in einem Speicher der tragbaren Bedienvorrichtung Daten mit einer Liste der Haushaltsgeräte und zu jedem Haushaltsgerät einer Kontextzuordnung abgelegt. Mit anderen Worten können die Haushaltsgeräte in mehrere Gruppen logisch unterteilt sein, die jeweils einen anderen Kontext betreffen. So kann eine erste Gruppe bzw. ein erster Kontext eine Waschmaschine und einen Wäschetrockner beinhalten, während ein Herd, ein Backofen und eine Dunstabzugshaube zu einer anderen Gruppe gehören und somit einem anderen Kontext - hier einem Küchenkontext - zugeordnet sein können. In einer Ausführungsform ist dabei vorgesehen, dass die Steuereinheit das zumindest eine Geräteverlinkungsobjekt abhängig von der Kontextzuordnung bereitstellt. Beispielsweise können die Geräteverlinkungsobjekte ausschließlich innerhalb des jeweiligen Kontexts angezeigt werden. Auf diese Art und Weise kann verhindert werden, dass beispielsweise bei einer Waschmaschine ein Verlinkungsobjekt zu einer Dunstabzugshaube angezeigt wird. Insgesamt kann die graphische Benutzeroberfläche besonders übersichtlich gestaltet werden.

In einer Ausführungsform wird auf der Hausgerätebedienseite einer Waschmaschine ein graphisches Geräteverlinkungsobjekt für einen Wäschetrockner angezeigt. Nach Empfangen einer Bedieneingabe, über die der Benutzer dieses Geräteverlinkungsobjekt auswählt, kann die Steuereinheit dann von der aktuellen Hausgerätebedienseite der Waschmaschine zu einer Hausgerätebedienseite des Wäschetrockners wechseln. Eine solche Vorgehensweise ist besonders benutzerfreundlich, denn der Benutzer kann von der Hausgerätebedienseite der Waschmaschine direkt zur Hausgerätebedienseite wechseln, welche die Bedienung des Wäschetrockners ermöglicht. Diese Ausführungsform macht sich die Tatsache zunutze, dass Wäschetrockner üblicherweise im Anschluss an einen Waschprozess genutzt und somit unmittelbar nach der Waschmaschine bedient werden.

Ergänzend oder alternativ kann auch vorgesehen sein, dass auf der Hausgerätebedienseite eines Herds ein graphisches Geräteverlinkungsobjekt für eine Dunstabzugshaube bereitgestellt wird. Nach Empfangen einer Bedieneingabe, über die der Benutzer dieses Geräteverlinkungsobjekt auswählt, kann die Steuereinheit dann von der Hausgerätebedienseite des Herds zu einer Hausgerätebedienseite der Dunstabzugshaube wechseln. Auch dies ist besonders benutzerfreundlich, da der Benutzer beim Bedienen des Herds direkt zur Bedienung der Dunstabzugshaube wechseln und somit beispielsweise diese aktivieren kann.

Es erweist sich auch als vorteilhaft, wenn die oben genannte Seite der von den Hausgerätebedienseiten verschiedenen Themenkategorie eine Rezeptseite mit einem Kochrezeptvorschlag ist und auf dieser Rezeptseite ein graphisches Geräteverlinkungsobjekt für ein Gargerät, insbesondere einen Backofen, bereitgestellt wird. Die Steuereinheit kann nach Empfangen einer Bedieneingabe, über die der Benutzer dieses Geräteverlinkungsobjekt auswählt, von der aktuellen Rezeptseite zu einer Hausgerätebedienseite des Gargeräts wechseln. Der Benutzer hat folglich die Möglichkeit, direkt von der Rezeptseite, auf welcher ein Kochrezeptvorschlag angezeigt wird, zu der Bedienseite für das Gargerät zu wechseln. Diese Ausführungsform erweist sich insbesondere dann als vorteilhaft, wenn der Benutzer einen für ihn passenden Kochrezeptvorschlag findet und dann auch direkt umsetzen möchte. Der Benutzer braucht hier nicht mühsam zum Hauptmenü zu wechseln, sondern kann direkt zur Hausgerätebedienseite des Gargeräts gelangen, um das Gargerät zu bedienen.

Weiterhin kann vorgesehen sein, dass dem Geräteverlinkungsobjekt für das Gargerät auch eine Schaltfläche zugeordnet, insbesondere darin integriert, ist. Wird diese Schaltfläche betätigt, kann die Steuereinheit unter Beibehaltung der aktuell angezeigten Rezeptseite Steuersignale mit zu dem Kochrezeptvorschlag abgespeicherten Gargeräteeinstellungen an das Gargerät übertragen. Dies bedeutet, dass ausgehend von der aktuell angezeigten Rezeptseite auch entsprechende bzw. dem angezeigten Kochrezeptvorschlag zugeordnete Einstellungen des Gargeräts vorgenommen werden können, ohne dass die graphische Benutzeroberfläche zu der tatsächlichen Hausgerätebedienseite des Gargeräts wechselt. Durch ein einziges Betätigen der Schaltfläche kann der Benutzer also bewirken, dass die entsprechenden Einstellungen automatisch an das Gargerät übermittelt werden und das Gargerät somit aufgrund der empfangenen Steuersignale zur Umsetzung der Einstellungen angesteuert wird. Bei diesen Einstellungen kann es sich beispielsweise um ein Betriebsprogramm des Gargeräts handeln, welches speziell für den angezeigten Kochrezeptvorschlag ausgewählt wird.

Ganz allgemein kann vorgesehen sein, dass einem Geräteverlinkungsobjekt eine Schaltfläche zugeordnet ist, welche zum Ein- und/oder Ausschalten des dem Geräteverlinkungsobjekt zugeordneten Haushaltsgeräts und/oder zum Einleiten eines Betriebsprozesses dieses Haushaltsgeräts dient, ohne dass zu der dahinter stehenden Hausgerätebedienseite dieses Haushaltsgeräts gewechselt wird. Wird eine Betätigung dieser Schaltfläche durch die Steuereinheit detektiert, so werden unter Beibehaltung der aktuell angezeigten Seite Steuersignale an das dem Geräteverlinkungsobjekt zugeordnete Haushaltsgerät übertragen, welche dann das Ein- und/oder Ausschalten bewirken und/oder den Betriebsprozess dieses Haushaltsgeräts einleiten. Diese Ausführungsform erweist sich insbesondere beim Bedienen eines Herds als besonders vorteilhaft. Ohne die Hausgerätebedienseite des Herds zu verlassen, kann der Benutzer nämlich durch eine einzelne Betätigung der Schaltfläche des angezeigten Geräteverlinkungsobjekts beispielsweise die Dunstabzugshaube aktivieren. Dazu braucht der Benutzer nicht zu der Hausgerätebedienseite der Dunstabzugshaube zu wechseln.

Erfindungsgemäß werden das zumindest eine Geräteverlinkungsobjekt und/oder zumindest eine Verlinkungsobjekt zu einer Seite einer von den Hausgerätebedienseiten verschiedenen Themenkategorie abhängig von einer Historie der Bedieneingaben des Benutzers bereitgestellt. Die Steuereinheit speichert die empfangenen Bedieneingaben also in einem Speicher ab und stellt die Verlinkungsobjekte dann abhängig von den abgelegten Daten bereit. Somit es möglich, die Verlinkungsobjekte zu priorisieren und situationsabhängig sowie bedarfsgerecht zu erzeugen. Beispielsweise können somit Situationen verhindert werden, bei denen ein Verlinkungsobjekt stets angezeigt wird, obwohl der Benutzer dieses Verlinkungsobjekt über eine längere Zeitdauer noch nie ausgewählt hat. Andererseits können auch Verlinkungsobjekte ausgeblendet werden, welche zu Kochrezepten oder aber zu anderen Empfehlungsseiten führen und bereits einmal ausgewählt wurden. Auf diese Art und Weise können dynamische Verlinkungsobjekte bereitgestellt werden, die situationsabhängig angezeigt oder nicht angezeigt werden.

Es kann also auch vorgesehen sein, dass zusätzlich zu den Geräteverlinkungsobjekten, welche direkt zu einer Hausgerätebedienseite zum Bedienen eines zugeordneten Haushaltsgeräts führen, auch andere Verlinkungsobjekte (Toasts) angezeigt werden, welche zu Seiten einer anderen Themenkategorie führen. Solche Seiten können beispielsweise Rezeptseiten mit Kochrezeptvorschlägen und/oder Service-Seiten mit Einstellungen und/oder mit Kundendienstdaten und/oder mit statistischen Benutzerdaten und/oder mit Statusdaten der jeweiligen Haushaltsgeräte und/oder mit Hinweisen, Tricks, Tipps und dergleichen.

Die Erfindung betrifft außerdem ein System mit mehreren Haushaltsgeräten und einer erfindungsgemäßen Bedienvorrichtung sowie ein Verfahren mit den Merkmalen gemäß dem unabhängigen Verfahrensanspruch. Ein erfindungsgemäßes Computerprogrammprodukt umfasst ein Speichermedium, auf welchem ein Computerprogramm abgelegt ist, welches dazu ausgelegt ist, beim Ausführen durch eine Steuereinheit einer tragbaren Bedienvorrichtung ein erfindungsgemäßes Verfahren durchzuführen.

Die mit Bezug auf die erfindungsgemäße Bedienvorrichtung vorgestellten bevorzugten Ausführungsformen und deren Vorteile gelten entsprechend für das erfindungsgemäße System, das Verfahren sowie für das erfindungsgemäße Computerprogrammprodukt.

Weitere Merkmale der Erfindung ergeben sich aus den Ansprüchen, den Figuren und der Figurenbeschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder aber in Alleinstellung verwendbar.

Die Erfindung wird nun anhand eines bevorzugten Ausführungsbeispiels sowie unter Bezugnahme auf die beigefügten Zeichnungen näher erläutert.

Es zeigen:
- Fig. 1: in schematischer Darstellung ein Blockdiagramm eines Systems mit einer tragbaren Bedienvorrichtung und einer Vielzahl von Haushaltsgeräten gemäß einer Ausführungsform der Erfindung; und
- Fig. 2 bis Fig. 12: schematische Darstellungen zur Erläuterung der Gestaltung einer graphischen Benutzeroberfläche, welche auf der tragbaren Bedienvorrichtung bereitgestellt wird.

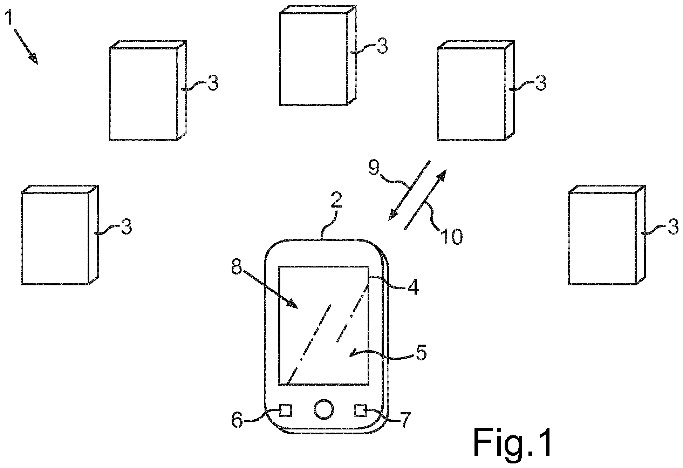

Ein in Fig. 1 dargestelltes System 1 umfasst eine tragbare Bedienvorrichtung 2 sowie eine Mehrzahl von Haushaltsgeräten 3, welche in einem Haushalt aufgestellt sind und beispielsweise folgende Haushaltsgeräte beinhalten können: eine Waschmaschine, einen Wäschetrockner, einen Backofen, einen Herd, eine Dunstabzugshaube, eine Kühl-Gefrierkombination, eine Geschirrspülmaschine und dergleichen. Die Bedienvorrichtung 2 ist im Ausführungsbeispiel in Form eines mobilen Endgeräts bereitgestellt, nämlich eines Smartphones. Die Bedienvorrichtung 2 weist eine Anzeigeeinrichtung 4 auf, welche eine berührungssensitive Oberfläche 5 hat und somit insgesamt als Touchscreen ausgebildet ist. In der Bedienvorrichtung 2 ist eine Steuereinheit 6 angeordnet, welche zur Ansteuerung der Anzeigeeinrichtung 4 ausgebildet ist und außerdem Bedieneingaben empfängt, die ein Benutzer an der berührungssensitiven Oberfläche 5 vornimmt. Zusätzlich umfasst die Bedienvorrichtung 2 auch eine Kommunikationseinrichtung 7, welche zur drahtlosen Kommunikation mit den Haushaltsgeräten 3 ausgebildet ist. Diese Kommunikation kann beispielsweise über ein drahtloses Heimnetzwerk erfolgen, zum Beispiel über ein WLAN-Netzwerk.

Auf der Bedienvorrichtung 2 wird eine Applikation als Computerprogramm installiert, die bzw. das der Benutzer jederzeit starten kann. Dies erfolgt durch entsprechende Bedieneingaben an der berührungssensitiven Oberfläche 5. Wird diese Applikation aktiviert, so erzeugt die Steuereinheit 6 auf der Anzeigeeinrichtung 4 eine graphische Benutzeroberfläche 8, über welche die Haushaltsgeräte 3 bedient werden können. Über diese graphische Benutzeroberfläche 8 können einerseits Statussignale mit Informationen über den aktuellen Betriebszustand der Haushaltsgeräte 3 ausgegeben werden, wobei die Statussignale von den Haushaltsgeräten 3 an die Bedienvorrichtung 2 übertragen werden. Andererseits kann der Benutzer über die Benutzeroberfläche 8 die Haushaltsgeräte 3 steuern, indem entsprechende Bedieneingaben durchgeführt werden.

Insgesamt können also von den Haushaltsgeräten 3 Statussignale 9 mit Informationen über den aktuellen Betriebszustand an die Bedienvorrichtung 2 übermittelt werden, während von der Bedienvorrichtung 2 Steuersignale 10 an die Haushaltsgeräte 3 übermittelt werden.

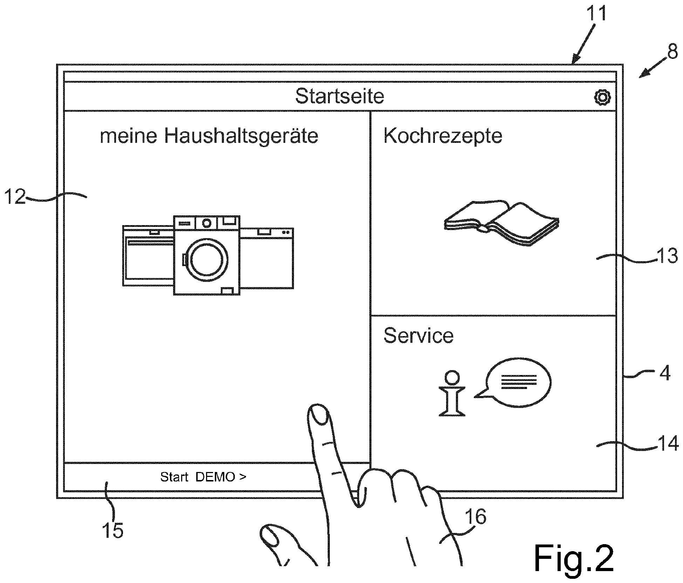

Die genannte graphische Benutzeroberfläche 8 besteht aus einer Vielzahl von separat aufrufbaren Seiten, welche hierarchisch geordnet sind. Der Aufbau dieser graphischen Benutzeroberfläche 8 wird nachfolgend unter Bezugnahme auf die Fig. 2 bis 12 näher erläutert:
Die Seiten der graphischen Benutzeroberfläche 8 sind in drei Hierarchiestufen geordnet. Es gibt eine Startseite als erste Hierarchiestufe, Menüseiten als zweite Hierarchiestufe sowie die eigentlichen Inhaltsseiten als dritte Hierarchiestufe, welche alle vorzugsweise in Vollbilddarstellung dargestellt werden.

Direkt nach dem Start der Applikation wird zunächst eine in Fig. 2 gezeigte Startseite 11 angezeigt, auf welcher alle inhaltlichen Themengebiete bzw. Themenbereiche bildlich und in Textform vorgestellt sind, um einen groben Überblick über die Inhalte zu geben. Wie aus Fig. 2 hervorgeht, beinhaltet die Startseite 11 einen ersten Schaltbereich 12 "meine Haushaltsgeräte", einen zweiten Schaltbereich 13 "Kochrezepte" sowie einen dritten Schaltbereich 14 "Service". Des Weiteren ist auch ein weiterer Schaltbereich 15 "Start Demo" vorgesehen. Ein Benutzer 16 kann einen der Schaltbereiche auswählen, um dann zu der jeweiligen Themenkategorie bzw. dem jeweiligen Themengebiet zu gelangen. Dies bedeutet, dass unterschiedliche Themenkategorien (hier Haushaltsgeräte, Kochrezepte und Service) und zu jeder Themenkategorie die zugeordneten Inhaltsseiten vorgesehen sind. Wird der Schaltbereich 12 "meine Haushaltsgeräte" ausgewählt, wird die Startseite 11 zu einem Hausgeräteauswahlmenü gewechselt. Wird der Schaltbereich 13 "Kochrezepte" ausgewählt, wechselt die Benutzeroberfläche 8 zu einem Menü mit Kochrezepten. Entsprechend gelangt der Benutzer 16 zu einem Service-Menü, wenn der Schaltbereich 14 "Service" ausgewählt wird.

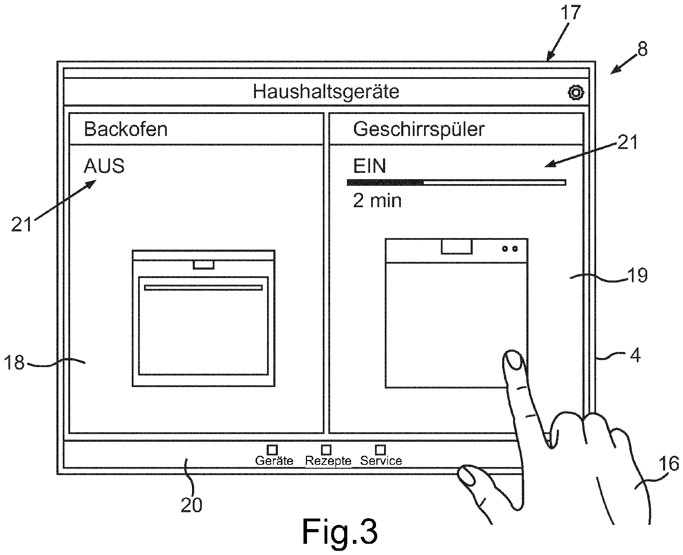

Ein beispielhaftes Hausgeräteauswahlmenü 17 ist in Fig. 3 dargestellt. Zu jedem aktuell verfügbaren Haushaltsgerät 3 wird hier ein graphisches Hausgeräteobjekt 18, 19 angezeigt, welches einen Schaltbereich darstellt, der durch den Benutzer 16 betätigt werden kann. Im Ausführungsbeispiel gemäß Fig. 3 ist ein Hausgeräteobjekt 18 für einen Backofen sowie ein Hausgeräteobjekt 19 für eine Geschirrspülmaschine dargestellt. In einem balkenförmigen Schaltbereich 20 befinden sich Schaltflächen, welche zu den anderen Themengebieten und/oder zur Startseite führen können.

In dem Hausgeräteauswahlmenü 17 können bei dem jeweiligen Hausgeräteobjekt 18, 19 bereits Statusinformationen 21 angezeigt werden, die den aktuellen Betriebszustand des jeweiligen Haushaltsgeräts 3 charakterisieren und von dem jeweiligen Haushaltsgerät 3 empfangen werden. Bei dem Backofen wird beispielsweise angezeigt, dass dieses Haushaltsgerät 3 ausgeschaltet ist und der Benutzer 16 den Backofen einschalten müsste, falls eine Bedienung des Backofens gewünscht ist. Zu dem Geschirrspüler wird wiederum angezeigt, dass dieser eingeschaltet ist und zusätzlich noch zwei Minuten bis zum Ende des Spülvorgangs verbleiben.

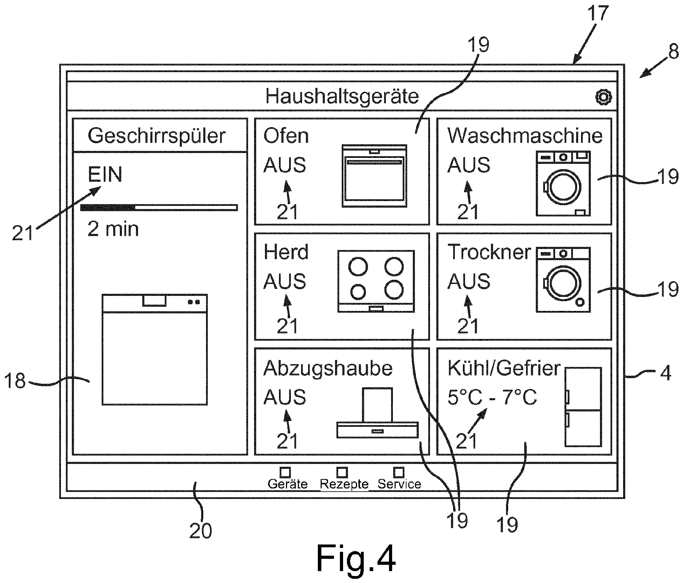

Sind mehrere Haushaltsgeräte aktuell verfügbar, so kann das Hausgeräteauswahlmenü 17 gemäß Fig. 4 bereitgestellt werden. Da der Geschirrspüler momentan aktiviert ist, kann das zugeordnete Hausgeräteobjekt 18 größer als Hausgeräteobjekte 19 dargestellt werden, die Haushaltsgeräten 3 zugeordnet sind, die momentan ausgeschaltet sind. Es werden also alle vorhandenen Geräte 3 sowie deren aktueller Status angezeigt. Die Hausgeräteobjekte 18, 19 ordnen sich dabei entsprechend dem jeweiligen aktuellen Status an.

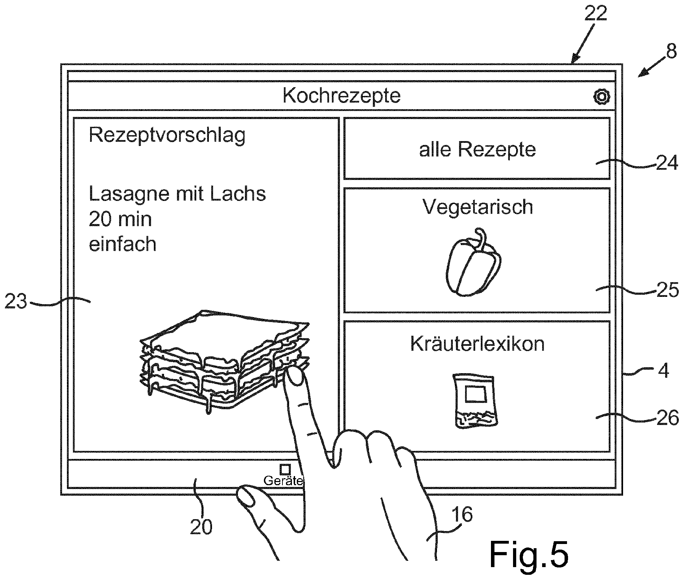

Wird ausgehend von der Startseite 11 (vgl. Fig. 2) der Schaltbereich 13 "Kochrezepte" ausgewählt, so gelangt der Benutzer 16 zu einem Menü 22, wie es beispielhaft in Fig. 5 abgebildet ist. Durch Betätigen eines Schaltbereichs 23 kann der Benutzer 16 zu einer Rezeptseite wechseln, auf welcher das Rezept für eine Lasagne mit Lachs angezeigt wird. In dem Schaltbereich 23 wird also ein Rezeptvorschlag gemacht. Durch Betätigen eines Schaltbereichs 24 gelangt der Benutzer 16 zu einer Liste aller Rezeptseiten. Ein Schaltbereich 25 führt zu vegetarischen Kochrezepten. Ein weiterer Schaltbereich 26 führt wiederum zu einem Kräuterlexikon.

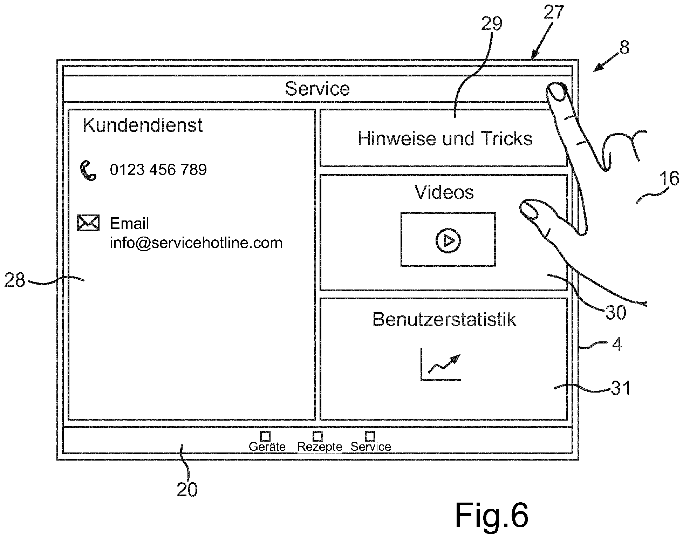

Wird ausgehend von der Startseite 11 gemäß Fig. 2 der Schaltbereich 14 "Service" betätigt, so wird ein Menü 27 angezeigt, wie es beispielhaft in Fig. 6 gezeigt ist. In einem Bereich 28 werden hier Kundendienstinformationen angezeigt, wobei durch Berühren dieser Informationen optional entweder direkt die hier angegebene Telefonnummer ausgewählt und angerufen wird oder aber eine E-Mail-Nachricht verfasst werden kann. Durch Betätigen eines Schaltbereichs 29 gelangt der Benutzer 16 zu Seiten mit Hinweisen und Tricks. Ein weiterer Schaltbereich 30 führt zu Videos mit Bedienanleitungen für die Haushaltsgeräte 3. Seiten mit Benutzerstatistik können über einen Schaltbereich 31 aufgerufen werden.

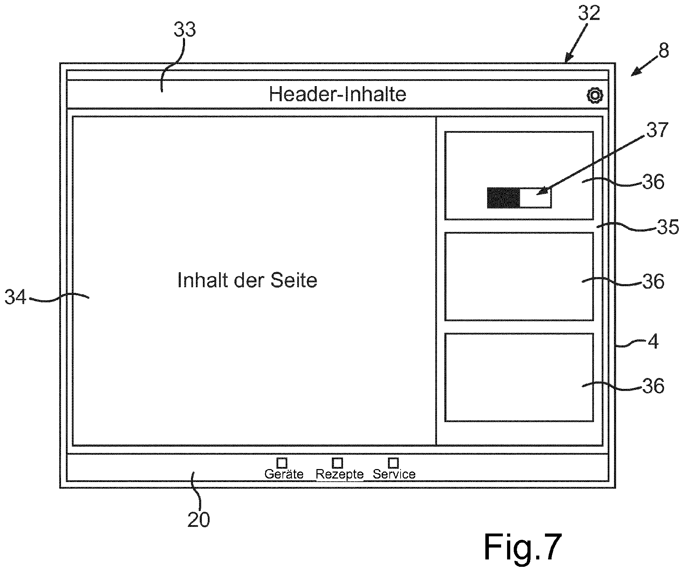

Die dritte Hierarchiestufe bilden die oben bereits erwähnten Inhaltsseiten, nämlich insbesondere Hausgerätebedienseiten für die jeweiligen Haushaltsgeräte 3 sowie Rezeptseiten mit Kochrezeptvorschlägen. Der allgemeine Aufbau einer Inhaltsseite 32 ist in Fig. 7 beispielhaft dargestellt. In einem balkenförmigen Bereich 33 werden hier so genannte Header-Inhalte angezeigt. Die eigentlichen Inhalte der Inhaltsseite 32 werden in einem großen, zentralen Bereich 34 dargestellt. Auf der rechten Seite befindet sich ein Toast-Bereich 35 mit Verlinkungsobjekten 36 (so genannten Toasts), die jeweils zu einer anderen Inhaltsseite führen. Der Benutzer 16 kann also zwischen Inhaltsseiten 32 unterschiedlicher Themenkategorien und/oder gleicher Themenkategorien wechseln.

Bei der Gestaltung der Verlinkungsobjekte 36 können folgende Regeln aufgestellt werden: Die Verlinkungsobjekte 36 stellen kontextbezogene Informationen einer Inhaltsseite 32 zur Verfügung und bieten dem Benutzer 16 einen nächstmöglichen Bedienschritt an. Die Verlinkungsobjekte 36 zeigen keine Informationen an, die Teil der geöffneten Inhaltsseite 32 bzw. des Bereichs 34 sind. Die Verlinkungsobjekte 36 verweisen nämlich immer auf eine eigene Inhaltsseite 32, die von der aktuell geöffneten Inhaltsseite 32 unterschiedlich ist. Die einem Verlinkungsobjekt 36 zugeordnete Inhaltsseite 32 kann auch über die herkömmliche Navigation über die Startseite 11 erreicht werden. Die Verlinkungsobjekte 36 können optional auch eine Schaltfläche 37 beinhalten bzw. diese kann in das Verlinkungsobjekt 36 integriert sein, um eine Bedienung von einzelnen Funktionen eines Haushaltsgeräts 3 zu ermöglichen. Wird aktuell beispielsweise eine Hausgerätebedienseite der Waschmaschine angezeigt und stellt ein Verlinkungsobjekt 36 eine Verknüpfung mit der Hausgerätebedienseite des Wäschetrockners dar, so kann mit einer solchen Schaltfläche 37 der Wäschetrockner aktiviert oder ausgeschaltet werden, ohne dass die aktuell angezeigte Hausgerätebedienseite gewechselt wird.

Es können insbesondere folgende Typen bzw. Kategorien von Verlinkungsobjekten 36 vorgesehen sein:
- ein Geräteverlinkungsobjekt, welches zu einer Hausgerätebedienseite zum Bedienen eines Haushaltsgeräts 3 führt;
- ein Rezeptverlinkungsobjekt, welches mit einer Rezeptseite mit einem Kochrezeptvorschlag verlinkt ist;
- ein Vorschlagsverlinkungsobjekt, welches zu einer Service-Seite mit Tipps zu Geräten oder anderen Inhalten führt, wie beispielsweise Zusatztipps, Videos, Anleitungen und dergleichen;
- ein Kundendienst-Verlinkungsobjekt, welches zu Service-Seiten mit Kundendienstinformationen von spezifischen Geräten führt; und
- ein Statistik-Verlinkungsobjekt, welches zu Service-Seiten mit Benutzerstatistik führt.

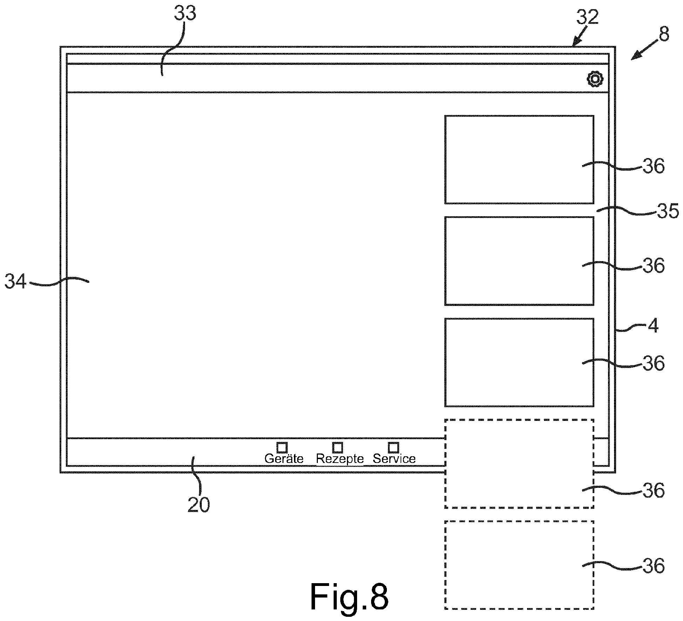

Bezug nehmend auf Fig. 8 kann einer bestimmten Inhaltsseite 32 eine Vielzahl von Verlinkungsobjekten 36 zugeordnet sein, die bei dieser Inhaltsseite 32 angezeigt werden können. Da beispielsweise lediglich drei Verlinkungsobjekte 36 zu einem bestimmten Zeitpunkt gleichzeitig angezeigt werden können und einer Inhaltsseite 32 auch insgesamt mehrere Verlinkungsobjekte 36 zugeordnet sein können (vergleiche Fig. 8), werden die Verlinkungsobjekte 36 priorisiert. Mit anderen Worten wird mittels der Steuereinheit 6 der Bedienvorrichtung 2 jeweils ein Prioritätswert zu jedem Verlinkungsobjekt 36 einer Inhaltsseite 32 zugeordnet. Die Reihenfolge der anzuzeigenden Verlinkungsobjekte 36 wird dann abhängig von den Prioritätswerten festgelegt. Den höchsten Prioritätswert können beispielsweise die Hausgeräteverlinkungsobjekte haben, während die Verlinkungsobjekte 36 anderer Kategorie geringere Prioritätswerte aufweisen können. So kann beispielsweise der Wäschetrockner in der Hausgerätebedienseite der Waschmaschine die höchste Priorität haben, sodass das Hausgeräteverlinkungsobjekt für den Wäschetrockner stets angezeigt wird. Sind einer Inhaltsseite 32 mehrere Verlinkungsobjekte 36 zugeordnet, die nicht alle gleichzeitig angezeigt werden können, wie dies schematisch in Fig. 8 angedeutet ist, so werden lediglich die Verlinkungsobjekte mit dem größeren Prioritätswert angezeigt. Optional kann hier auch eine Scroll-Funktion vorgesehen sein.

Die Prioritätswerte und somit die Reihenfolge der Anzeige der Verlinkungsobjekte 36 können sich auch während des Betriebs ändern. Insbesondere erfolgt diese Änderung abhängig von den bisherigen Bedieneingaben des Benutzers 16, die in einem Speicher der Bedienvorrichtung abgelegt und durch die Steuereinheit 6 über die Zeit ausgewertet werden. Wenn beispielsweise ein Verlinkungsobjekt 36 bereits angezeigt wurde, kann sich seine Priorität von dem maximalen auf den minimalen Wert ändern. Dies kann auch bedeuten, dass dieses Verlinkungsobjekt für eine bestimmte Zeitdauer überhaupt nicht angezeigt wird, bis es dann an der untersten Stelle in dem Toast-Bereich 35 angezeigt wird. Optional kann aber auch eine Zufallsfunktion entscheiden, wie die Prioritätswerte eingestellt werden.

Die einzelnen Kategorien von Inhaltsseiten 32 werden nachfolgend näher beschrieben:

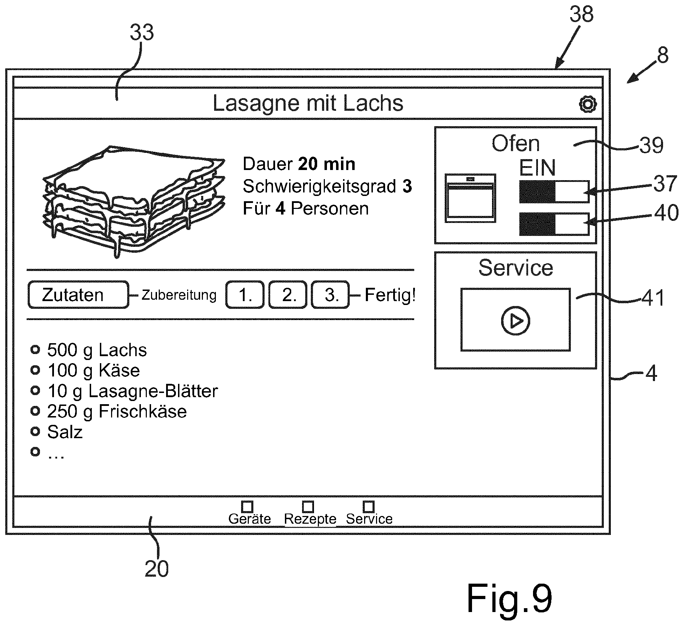

In Fig. 9 ist beispielhaft eine Rezeptseite 38 dargestellt, welche einen Kochrezeptvorschlag beinhaltet, hier eine Lasagne mit Lachs. Auf dieser Rezeptseite 38 kann ein Geräteverlinkungsobjekt 39 für einen Backofen dargestellt werden. Durch Auswählen dieses Hausgeräteverlinkungsobjekts 39 kann der Benutzer direkt zur Hausgerätebedienseite des Backofens gelangen. In dieses Geräteverlinkungsobjekt 39 sind hier eine erste Schaltfläche 37 sowie eine zweite Schaltfläche 40 integriert. Durch Betätigen der ersten Schaltfläche 37 kann der Benutzer 16 den Backofen ein- und wieder ausschalten. Durch Betätigen der zweiten Schaltfläche 14 kann der Benutzer 16 bewirken, dass die Bedienvorrichtung 2 Steuersignale 10 an den Backofen übermittelt, welche Einstellungen für den Backofen beinhalten, die speziell für den angezeigten Rezeptvorschlag "Lasagne mit Lachs" konzipiert sind. Diese Einstellungen können beispielsweise die Auswahl eines Betriebsprogramms des Backofens beinhalten. Ohne zur Hausgerätebedienseite des Backofens wechseln zu müssen, kann der Benutzer 16 also bestimmte Einstellungen an dem Backofen vornehmen.

Zusätzlich zu dem Geräteverlinkungsobjekt 39 kann auch ein Service-Verlinkungsobjekt 41 angezeigt werden, welches zu Service-Seiten führt.

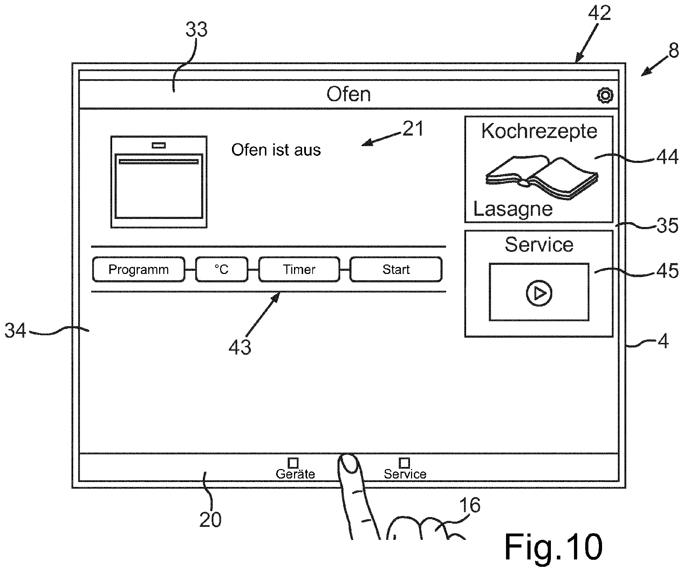

Ein Beispiel einer Hausgerätebedienseite 42 ist in Fig. 10 dargestellt. Hier ist eine Hausgerätebedienseite 42 für einen Backofen gezeigt. In dem Bereich 34 werden einerseits die Statusinformationen 21 bezüglich des aktuellen Betriebszustands des Backofens angezeigt. Andererseits werden Steuerschaltflächen 43 bereitgestellt, welche zur Steuerung des Backofens dienen. In dem Toast-Bereich 35 können auch mehrere Verlinkungsobjekte angezeigt werden. Beispielhaft wird hier ein Rezeptverlinkungsobjekt 44 sowie ein Service-Verlinkungsobjekt 45 angezeigt.

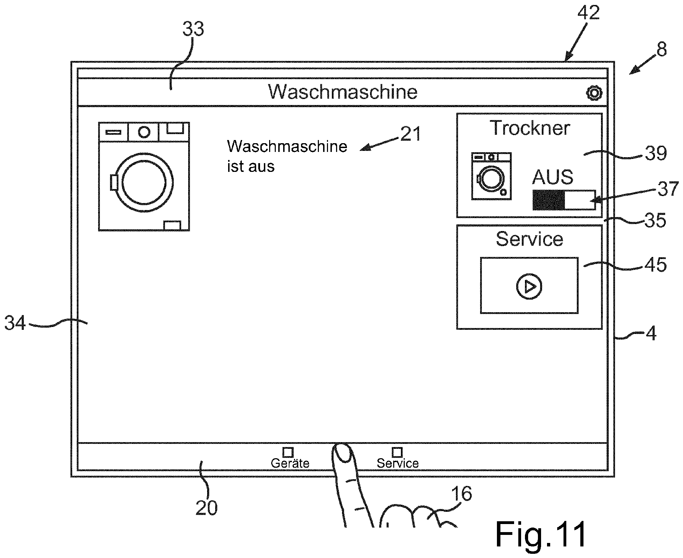

Eine beispielhafte Hausgerätebedienseite 42 für eine Waschmaschine ist in Fig. 11 gezeigt. Hier kann ein Geräteverlinkungsobjekt 39 angezeigt werden, welches zu einer Hausgerätebedienseite 42 des Wäschetrockners führt. In dieses Geräteverlinkungsobjekt 39 kann eine Schaltfläche 37 integriert sein, welche zum Ein- und Ausschalten des Wäschetrockners dient, ohne zur Hausgerätebedienseite 42 des Wäschetrockners wechseln zu müssen. Gleichzeitig werden auch Statusinformationen des Wäschetrockners innerhalb dessen Geräteverlinkungsobjekts 39 angezeigt.

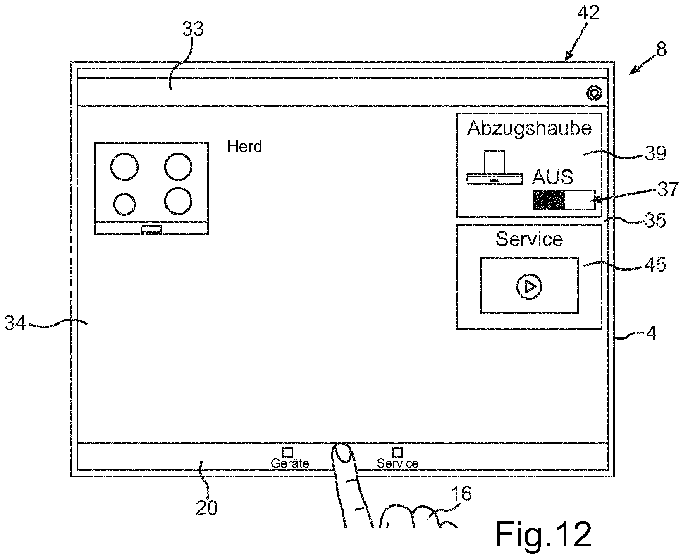

Wie aus Fig. 12 hervorgeht, kann auf einer Hausgerätebedienseite 42 eines Herds ein Geräteverlinkungsobjekt 39 angezeigt werden, welches zur Hausgerätebedienseite 42 einer Dunstabzugshaube führt. In dieses Verlinkungsobjekt 39 kann ebenfalls eine Schaltfläche 37 integriert sein, welche zum Ein- und Ausschalten der Dunstabzugshaube dient. Gleichzeitig werden auch Statusinformationen in das Verlinkungsobjekt 39 integriert, welche den aktuellen Betriebszustand der Dunstabzugshaube beschreiben. Optional kann auch vorgesehen sein, dass die dargestellten Verlinkungsobjekte 36 farblich codiert angezeigt werden. Jedem Themengebiet bzw. jeder Themenkategorie kann dabei eine bestimmte Farbe zugeordnet sein. Dies bedeutet, dass jedem Typ von Verlinkungsobjekten 36 jeweils eine individuelle Farbgebung zugeordnet wird. Beispielsweise können die Geräteverlinkungsobjekte 39 eine individuelle Farbgebung aufweisen. Entsprechendes gilt auch für Service-Verlinkungsobjekte 45 sowie für Rezept-Verlinkungsobjekte 44.

### Bezugszeichenliste

- 1: System
- 2: Bedienvorrichtung
- 3: Haushaltsgeräte
- 4: Anzeigeeinrichtung
- 5: Oberfläche
- 6: Steuereinheit
- 7: Kommunikationseinrichtung
- 8: Benutzeroberfläche
- 9: Statussignale
- 10: Steuersignale
- 11: Startseite
- 12: Schaltbereich
- 13: Schaltbereich
- 14: Schaltbereich
- 15: Schaltbereich
- 16: Benutzer
- 17: Hausgeräteauswahlmenü
- 18: Hausgeräteobjekt
- 19: Hausgeräteobjekt
- 20: Schaltbereich
- 21: Statusinformationen
- 22: Menü
- 23: Schaltbereich
- 24: Schaltbereich
- 25: Schaltbereich
- 26: Schaltbereich
- 27: Menü
- 28: Bereich
- 29: Schaltbereich
- 30: Schaltbereich
- 31: Schaltbereich
- 32: Inhaltsseite
- 33: Bereich
- 34: Bereich
- 35: Toast-Bereich
- 36: Verlinkungsobjekte
- 37: Schaltfläche
- 38: Rezeptseite
- 39: Geräteverlinkungsobjekt
- 40: Schaltfläche
- 41: Service-Verlinkungsobjekt
- 42: Hausgerätebedienseite
- 43: Steuerschaltflächen
- 44: Rezeptverlinkungsobjekt
- 45: Service-Verlinkungsobjekt

## Patentansprüche

1. Tragbare Bedienvorrichtung (2) zur Fernsteuerung einer Mehrzahl von Haushaltsgeräten (3), mit einer berührungssensitiven Anzeigeeinrichtung (4), mit einer mit der Anzeigeeinrichtung (4) gekoppelten Steuereinheit (6) zum Ansteuern der Anzeigeeinrichtung (4) und zum Empfangen von an der berührungssensitiven Anzeigeeinrichtung (4) durchgeführten Bedieneingaben eines Benutzers (16), und mit einer Kommunikationseinrichtung (7) zur drahtlosen Kommunikation mit den Haushaltsgeräten (3), wobei die Steuereinheit (6) dazu ausgelegt ist, die Anzeigeeinrichtung (4) zum Anzeigen einer graphischen Benutzeroberfläche (8) zum Bedienen der Haushaltsgeräte (3) anzusteuern und abhängig von den über die Benutzeroberfläche (8) durchgeführten Bedieneingaben des Benutzers (16) Steuersignale (10) über die Kommunikationseinrichtung (7) an die Haushaltsgeräte (3) zu übertragen und Statussignale (9) von den Haushaltsgeräten (3) zu empfangen und über die Benutzeroberfläche (8) auszugeben, wobei die graphische Benutzeroberfläche (8) eine Mehrzahl von separat voneinander auswählbaren Hausgerätebedienseiten (42) zum Bedienen jeweils eines zugeordneten Haushaltsgeräts (3) aufweist, und wobei die Steuereinheit (6) dazu ausgelegt ist, in einem Hausgeräteauswahlmenü (17) der Benutzeroberfläche (8) graphische Hausgeräteobjekte (18, 19) anzuzeigen, welche jeweils mit einer zugeordneten der Hausgerätebedienseiten (42) verlinkt sind, und nach Empfangen einer Bedieneingabe, über die der Benutzer (16) eines der Hausgeräteobjekte (18, 19) auswählt, die dem ausgewählten Haushaltsgerät (3) zugeordnete Hausgerätebedienseite (42) anzuzeigen, wobei die Steuereinheit (6) dazu ausgelegt ist, auf der Hausgerätebedienseite (42) zumindest eines Haushaltsgeräts (3) und/oder auf einer Seite (38) einer von den Hausgerätebedienseiten (42) verschiedenen Themenkategorie ein graphisches Geräteverlinkungsobjekt (39) bereitzustellen und nach Empfangen einer Bedieneingabe, über die der Benutzer (16) das Geräteverlinkungsobjekt (39) auswählt, von der aktuell angezeigten Seite (38, 42) zu einer durch das ausgewählte Geräteverlinkungsobjekt (39) definierten Hausgerätebedienseite (42) des zugeordneten Haushaltsgeräts (3) zu wechseln, **dadurch gekennzeichnet, dass** die Steuereinheit (6) dazu ausgelegt ist, die empfangenen Bedieneingaben in einem Speicher abzuspeichern und das zumindest eine Geräteverlinkungsobjekt (39) und/oder zumindest ein Verlinkungsobjekt (36) für eine Seite (38) einer von den Hausgerätebedienseiten (42) verschiedenen Themenkategorie abhängig von einer Historie der Bedieneingaben bereitzustellen.

2. Bedienvorrichtung (2) nach Anspruch 1, **dadurch gekennzeichnet, dass** in einem Speicher der tragbaren Bedienvorrichtung (2) Daten mit einer Liste der Haushaltsgeräte (3) und zu jedem Haushaltsgerät (3) einer Kontextzuordnung abgelegt sind und die Steuereinheit (6) dazu ausgelegt ist, das zumindest eine Geräteverlinkungsobjekt (39) abhängig von der Kontextzuordnung bereitzustellen.

3. Bedienvorrichtung (2) nach Anspruch 1 oder 2, **dadurch gekennzeichnet, dass** die Steuereinheit (6) dazu ausgelegt ist, auf der Hausgerätebedienseite (42) einer Waschmaschine ein graphisches Geräteverlinkungsobjekt (39) für einen Wäschetrockner bereitzustellen und nach Empfangen einer Bedieneingabe, über die der Benutzer (16) dieses Geräteverlinkungsobjekt (39) auswählt, von der Hausgerätebedienseite (42) der Waschmaschine zu einer Hausgerätebedienseite (42) des Wäschetrockners zu wechseln.

4. Bedienvorrichtung (2) nach einem der vorhergehenden Ansprüche, **dadurch gekennzeichnet, dass** die Steuereinheit (6) dazu ausgelegt ist, auf der Hausgerätebedienseite (42) eines Herds ein graphisches Geräteverlinkungsobjekt (39) für eine Dunstabzugshaube bereitzustellen und nach Empfangen einer Bedieneingabe, über die der Benutzer (16) dieses Geräteverlinkungsobjekt (39) auswählt, von der Hausgerätebedienseite (42) des Herds zu einer Hausgerätebedienseite (42) der Dunstabzugshaube zu wechseln.

5. Bedienvorrichtung (2) nach einem der vorhergehenden Ansprüche, **dadurch gekennzeichnet, dass** die Seite (38) der von den Hausgerätebedienseiten (42) verschiedenen Themenkategorie eine Rezeptseite (38) mit einem Kochrezeptvorschlag ist und die Steuereinheit (6) dazu ausgelegt ist, auf der Rezeptseite (38) ein graphisches Geräteverlinkungsobjekt (39) für ein Gargerät, insbesondere einen Backofen, bereitzustellen und nach Empfangen einer Bedieneingabe, über die der Benutzer (16) dieses Geräteverlinkungsobjekt (39) auswählt, von der aktuellen Rezeptseite (38) zu einer Hausgerätebedienseite (42) des Gargeräts zu wechseln.

6. Bedienvorrichtung (2) nach Anspruch 5, **dadurch gekennzeichnet, dass** dem Geräteverlinkungsobjekt (39) für das Gargerät eine Schaltfläche (40) zugeordnet ist und die Steuereinheit (6) dazu ausgelegt ist, nach Erfassen einer Betätigung der Schaltfläche (40) unter Beibehaltung der aktuell angezeigten Rezeptseite (38) Steuersignale (10) mit zu dem Kochrezeptvorschlag abgespeicherten Gargeräteeinstellungen an das Gargerät zu übertragen.

7. Bedienvorrichtung (2) nach einem der vorhergehenden Ansprüche, **dadurch gekennzeichnet, dass** dem Geräteverlinkungsobjekt (39) eine Schaltfläche (37) zum Ein- und/oder Ausschalten des dem Geräteverlinkungsobjekt (39) zugeordneten Haushaltsgeräts (3) und/oder zum Einleiten eines Betriebsprozesses dieses Haushaltsgeräts (3) zugeordnet ist und die Steuereinheit (6) dazu ausgelegt ist, nach Erfassen einer Betätigung der Schaltfläche (37) unter Beibehaltung der aktuell angezeigten Seite (38, 42) Steuersignale (10) zum Ein- und/oder Ausschalten und/oder zum Einleiten des Betriebsprozesses an das dem Geräteverlinkungsobjekt (39) zugeordnete Haushaltsgerät (3) zu übertragen.

8. Bedienvorrichtung (2) nach einem der vorhergehenden Ansprüche, **dadurch gekennzeichnet, dass** die Steuereinheit (6) dazu ausgelegt ist, zu detektieren, welche Haushaltsgeräte (3) zu einem aktuellen Zeitpunkt betriebsbereit sind, insbesondere ein Geräteverlinkungsobjekt (39), welches zur Hausgerätebedienseite (42) eines Haushaltsgeräts (3) führt, ausschließlich dann anzuzeigen, wenn dieses Haushaltsgerät (3) auch zumindest eine Betriebsbereitschaft aufweist und/oder aber bereits eingeschaltet ist.

9. Bedienvorrichtung (2) nach einem der vorhergehenden Ansprüche, **dadurch gekennzeichnet, dass** die Steuereinheit (6) dazu ausgelegt ist, eine direkte Verlinkung zwischen bestimmten Paaren von Hausgerätebedienseiten (42) bereitzustellen.

10. Bedienvorrichtung (2) nach einem der vorherigen Ansprüche, **dadurch gekennzeichnet, dass** die Steuereinheit (6) dazu ausgelegt ist, mittels Geräteverlinkungsobjekten (39) eine direkte Verlinkung zwischen einer Waschmaschine und einem Trockner, zwischen einem Herd und einer Abzugshaube und/oder zwischen einer Rezeptseite und einem Ofen bereitzustellen.

11. Bedienvorrichtung (2) nach einem der vorhergehenden Ansprüche, **dadurch gekennzeichnet, dass** die tragbare Bedienvorrichtung (2) als mobiles Kommunikationsendgerät, insbesondere als Mobiltelefon oder als Tablet-PC, ausgebildet ist.

12. System (1) mit zumindest einem ersten und einem zweiten Haushaltsgerät (3), und mit einer tragbaren Bedienvorrichtung (2) nach einem der vorhergehenden Ansprüche.

13. Verfahren zur Fernsteuerung von Haushaltsgeräten (3) mittels einer tragbaren Bedienvorrichtung (2), die eine berührungssensitive Anzeigeeinrichtung (4) und eine Steuereinheit (6) aufweist, welche die Anzeigeeinrichtung (4) ansteuert und an der berührungssensitiven Anzeigeeinrichtung (4) durchgeführte Bedieneingaben eines Benutzers (16) empfängt, wobei eine Kommunikationseinrichtung (7) der Bedienvorrichtung (2) mit den Haushaltsgeräten (3) drahtlos kommuniziert, wobei die Steuereinheit (6) die Anzeigeeinrichtung (4) zum Anzeigen einer graphischen Benutzeroberfläche (8) zum Bedienen der Haushaltsgeräte (3) ansteuert und abhängig von den über die Benutzeroberfläche (8) durchgeführten Bedieneingaben des Benutzers (16) Steuersignale (10) über die Kommunikationseinrichtung (7) an die Haushaltsgeräte (3) überträgt und Statussignale (9) von den Haushaltsgeräten (3) empfängt und über die Benutzeroberfläche (8) ausgibt, wobei die Benutzeroberfläche (8) eine Mehrzahl von separat voneinander auswählbaren Hausgerätebedienseiten (42) zum Bedienen jeweils eines zugeordneten Haushaltsgeräts (3) aufweist, und wobei die Steuereinheit (6) in einem Hausgeräteauswahlmenü (17) der Benutzeroberfläche (8) graphische Hausgeräteobjekte (18, 19) anzeigt, welche jeweils mit einer zugeordneten der Hausgerätebedienseiten (42) verlinkt sind, und nach Empfangen einer Bedieneingabe, über die der Benutzer (16) eines der Hausgeräteobjekte (18, 19) auswählt, die dem ausgewählten Haushaltsgerät (3) zugeordnete Hausgerätebedienseite (42) anzeigt, wobei die Steuereinheit (6) auf der Hausgerätebedienseite (42) zumindest eines Haushaltsgeräts (3) und/oder auf einer Seite (38) einer von den Hausgerätebedienseiten (42) verschiedenen Themenkategorie ein graphisches Geräteverlinkungsobjekt (39) bereitstellt und nach Empfangen einer Bedieneingabe, über die der Benutzer (16) das Geräteverlinkungsobjekt (39) auswählt, von der aktuell angezeigten Seite (38) zu einer durch das ausgewählte Geräteverlinkungsobjekt (39) definierten Hausgerätebedienseite (42) eines Haushaltsgeräts (3) wechselt, **dadurch gekennzeichnet, dass** die empfangenen Bedieneingaben in einem Speicher abgespeichert und das zumindest eine Geräteverlinkungsobjekt (39) und/oder zumindest ein Verlinkungsobjekt (36) für eine Seite (38) einer von den Hausgerätebedienseiten (42) verschiedenen Themenkategorie abhängig von einer Historie der Bedieneingaben bereitgestellt werden.

14. Computerprogrammprodukt mit einem Speichermedium, auf welchem ein Computerprogramm abgelegt ist, das dazu ausgelegt ist, beim Ausführen durch eine Steuereinheit (6) einer tragbaren Bedienvorrichtung (2) ein Verfahren nach Anspruch 13 durchzuführen.

## Claims

1. Portable control apparatus (2) for remote control of a plurality of household appliances (3), having a touch-sensitive display facility (4), having a control unit (6) coupled to the display facility (4) for actuating the display facility (4) and for receiving control inputs carried out by a user (16) on the touch-sensitive display facility (4), and having a communication facility (7) for wireless communication with the household appliances (3), wherein the control unit (6) is designed to actuate the display facility (4) for displaying a graphical user interface (8) for controlling the household appliances (3) and, as a function of the control inputs carried out by the user (16) by way of the user interface (8), to transmit control signals (10) by way of the communication facility (7) to the household appliances (3) and to receive status signals (9) from the household appliances (3) and to output the same by way of the user interface (8), wherein the graphical user interface (8) has a plurality of household appliance control pages (42) which can be selected separately from one another for controlling in each case an assigned household appliance (3), and wherein the control unit (6) is designed to display graphical household appliance objects (18, 19) in a household appliance selection menu (17) of the user interface (8), which are linked in each case with one of the assigned household appliance control pages (42), and after receiving a control input, by way of which the user (16) selects one of the household appliance objects (18, 19), to display the household appliance control page (42) assigned to the selected household appliance (3), wherein the control unit (6) is designed to provide a graphical appliance link object (39) on the household appliance control page (42) of at least one household appliance (3) and/or on a page (38) of a topic category which differs from the household appliance control pages (42), and after receiving a control input, by way of which the user (16) selects the appliance link object (39), to change from the currently displayed page (38, 42) to a household appliance control page (42) of the assigned household appliance (3) defined by the selected appliance link object (39), **characterised in that** the control unit (6) is designed to store the received control inputs in a storage device and to provide the at least one appliance link object (39) and/or at least one link object (36) for one page of a topic category which differs from the household appliance control pages (42) as a function of a history of the control inputs.

2. Control apparatus (2) according to claim 1, **characterised in that** data with a list of the household appliances (2) and, for each household appliance (3), a context assignment is stored in a storage device of the portable control apparatus (2), and the control unit (6) is designed to provide the at least one appliance link object (39) as a function of the context assignment.

3. Control apparatus (2) according to claim 1 or 2, **characterised in that** the control unit (6) is designed to provide a graphical appliance link object (39) for a tumble dryer on the household appliance control page (42) of a washing machine, and after receiving a control input, by way of which the user (16) selects this appliance link object (39), to change from the household appliance control page (42) of the washing machine to a household appliance control page (42) of the tumble dryer.

4. Control apparatus (2) according to one of the preceding claims, **characterised in that** the control unit (6) is designed to provide a graphical appliance link object (39) for an extractor hood on the household appliance control page (42) of a cooker, and after receiving a control input, by way of which the user (16) selects this appliance link object (39), to change from the household appliance control page (42) of the cooker to a household appliance control page (42) of the extractor hood.

5. Control apparatus (2) according to one of the preceding claims, **characterised in that** the page of the topic category which differs from the household appliance control pages (42) is a recipe page (38) with a cooking recipe suggestion and the control unit (6) is designed to provide a graphical appliance link object (38) for a cooking appliance, in particular an oven, on the recipe page (38), and after receiving a control input, by way of which the user (16) selects this appliance link object (39), to change from the current recipe page (38) to a household appliance control page (42) of the cooking appliance.

6. Control apparatus (2) according to claim 5, **characterised in that** a switching surface (40) is assigned to the appliance link object (39) for the cooking appliance and the control unit (6) is designed, after detecting an activation of the switching surface (40) while retaining the currently displayed recipe page (38), to transmit control signals (10) with cooking appliance settings stored with respect to the cooking recipe suggestion to the cooking appliance.

7. Control apparatus (2) according to one of the preceding claims, **characterised in that** a switching surface for switching on and/or off the household appliance (3) assigned to the appliance link object (39) and/or for initiating an operating process of this household appliance (3) is assigned to the appliance link object (39) and the control unit (6) is designed, after detecting an activation of the switching surface (37) while retaining the currently displayed page (38, 42), to transmit control signals (1) for switching on and/or off and/or for initiating the operating process in the household appliance (3) assigned to the appliance link object (39).

8. Control apparatus (2) according to one of the preceding claims, **characterised in that** the control unit (6) is designed to detect which household appliances (3) are operationally ready at a current point in time, in particular to display an appliance link object (39), which links to the household appliance control page (42) of a household appliance (3), exclusively if this household appliance (3) is also at least operationally ready and/or is already switched on.

9. Control apparatus (2) according to one of the preceding claims, **characterised in that** the control unit (6) is designed to provide a direct link between specific pairs of household appliance control pages (42).

10. Control apparatus (2) according to one of the preceding claims, **characterised in that** the control unit (6) is designed to provide a direct link between a washing machine and a dryer, between a cooker and an extractor hood and/or between a recipe page and an oven by means of appliance link objects (39).

11. Control apparatus (2) according to one of the preceding claims, **characterised in that** the portable control apparatus (2) is embodied as a mobile communication device, in particular as a mobile telephone or as a tablet PC.

12. System (1) having at least one first and one second household appliance (3) and having a portable control apparatus (2) according to one of the preceding claims.

13. Method for remote control of household appliances (3) by means of a portable control apparatus (2), which has a touch-sensitive display device (4) and a control unit (6), which actuates the display facility (4) and receives control inputs carried out by a user (16) on the touch-sensitive display facility (4), wherein a communication facility (7) of the control apparatus (2) communicates wirelessly with the household appliances (3), wherein the control unit (6) actuates the display facility (4) for displaying a graphical user interface (8) in order to control the household appliances (3) and as a function of the control inputs of the user (16) carried out by way of the user interface (8) transmits control signals (10) by way of the communication facility (7) to the household appliances (3) and receives status signals (9) from the household appliances (3) and outputs the same by way of the user interface (8), wherein the user interface (8) has a plurality of household appliance control pages (42) which can be selected separately from one another for controlling in each case an assigned household appliance (3), and wherein the control unit (6) displays graphical household appliance objects (18, 19) in a household appliance selection menu (17) of the user interface (8), which in each case is linked with one of the assigned household appliance control pages (42), and after receiving a control input, by way of which the user (16) selects one of the household appliance objects (18, 19), which displays the household appliance control page (42) assigned to the selected household appliance (3), wherein the control unit (6) provides a graphical appliance link object (39) on the household appliance control page (42) of at least one household appliance (3) and/or on a page (38) of a topic category which differs from the household appliance control pages (42), and after receiving a control input, by way of which the user (16) selects the appliance link object (38), changes from the currently displayed page (38) to a household appliance control page (42) of a household appliance (3) defined by the selected appliance link object (39), **characterised in that** the received control inputs are stored in a storage device and the at least one appliance link object (39) and/or at least one link object (36) are provided for a page (38) of a topic category which differs from the household appliance control pages (42) as a function of a history of the control inputs.

14. Computer program product with a storage medium, on which a computer program is stored, which is designed to carry out a method according to claim 13 upon execution by a control unit (6) of a portable control apparatus (2).

## Revendications

1. Dispositif de commande portable (2) servant à commander à distance une pluralité d'appareils électroménagers (3), comprenant un dispositif d'affichage tactile (4), un module de commande (6) couplé au dispositif d'affichage (4) servant à piloter le dispositif d'affichage (4) et à recevoir des instructions de commande entrées par un utilisateur (16) sur le dispositif d'affichage (4) tactile, et un moyen de communication (7) servant à communiquer sans fil avec les appareils électroménagers (3), dans lequel le module de commande (6) est configuré de manière à piloter le dispositif d'affichage (4) pour afficher une interface utilisateur (8) graphique servant à commander les appareils électroménagers (3), à transmettre, en fonction des instructions de commande de l'utilisateur (16) entrées par le biais de l'interface utilisateur (8), des signaux de commande (10) aux appareils ménagers (3) via le moyen de communication (7), à recevoir des signaux d'état (9) venant des appareils ménagers (3) et à les visualiser via l'interface utilisateur (8), dans lequel l'interface utilisateur (8) graphique comprend une pluralité de pages de commande d'appareil électroménager (42) sélectionnables séparément pour commander respectivement un appareil électroménager (3) associé, dans lequel le module de commande (6) est configuré de manière à afficher des objets graphiques d'appareil électroménager (18, 19) dans un menu de sélection d'appareil électroménager (17) de l'interface utilisateur (8), qui sont reliés respectivement à une page de commande (42) d'appareil électroménager associée et à afficher, à réception d'une instruction de commande de sélection de l'objet d'appareil électroménager (18, 19) par l'utilisateur (16), la page de commande (42) associée à l'appareil électroménager sélectionné (3), et dans lequel le module de commande (6) est configuré pour fournir, sur la page de commande (42) d'au moins un appareil électroménager (3) et/ou sur une page (38) d'une catégorie de thèmes différente des pages de commande (42) d'appareil électroménager, un objet graphique constituant un lien vers des appareils (39), et, à réception d'une instruction de commande de sélection de l'objet constituant un lien vers des appareils (39) par l'utilisateur (16), pour passer de la page affichée instantanément (38, 42) à une page de commande d'appareil électroménager (42) de l'appareil électroménager (3) associé définie par l'objet constituant un lien vers des appareils électroménagers (39) sélectionné,
**caractérisé en ce que** le module de commande (6) est configuré pour enregistrer les instructions de commande reçues dans une mémoire et fournir le au moins un objet constituant un lien vers des appareils (39) et/ou au moins un objet servant de lien (36) pour une page (38) d'une catégorie de thèmes différente des pages de commande d'appareil électroménager (42) en fonction d'un historique des instructions de commande.

2. Dispositif de commande (2) selon la revendication 1, **caractérisé en ce que** des données comportant une liste des appareils électroménagers (3) et une affectation de contexte pour chaque appareil électroménager (3) sont enregistrées dans une mémoire du dispositif de commande portable (2) et le module de commande (2) est configuré de manière à fournir au moins un objet constituant un lien vers des appareils (39) en fonction de l'affectation de contexte.

3. Dispositif de commande (2) selon la revendication 1 ou 2, **caractérisé en ce que** le module de commande (6) est configuré de manière à fournir un objet graphique constituant un lien vers des appareils (39) pour un sèche-linge sur la page de commande d'appareil électroménager (42) d'une machine à laver et, après réception d'une instruction de commande, par laquelle l'utilisateur (16) sélectionne cet objet constituant un lien vers des appareils (39), à passer de la page de commande d'appareil électroménager (42) de la machine à laver vers une page de commande d'appareil électroménager (42) du sèche-linge.

4. Dispositif de commande (2) selon l'une des revendications précédentes, **caractérisé en ce que** le module de commande (6) est configuré de manière à fournir un objet graphique constituant un lien vers des appareils (39) pour une hotte d'aspiration sur la page de commande d'appareil électroménager (42) d'une cuisinière et, après réception d'une instruction de commande, par laquelle l'utilisateur (16) sélectionne cet objet constituant un lien vers des appareils (39), à passer de la page de commande d'appareil électroménager (42) de la cuisinière à une page de commande d'appareil électroménager (42) de la hotte d'aspiration.

5. Dispositif de commande (2) selon l'une des revendications précédentes, **caractérisé en ce que** la page (38) de la catégorie de thèmes différente des pages de commande d'appareil (42) est une page de recette (38) comportant une suggestion de recette de cuisine et le module de commande (6) est configuré de manière à fournir, sur la page de recette (38), un objet graphique constituant un lien vers un appareil (39) pour un appareil de cuisson, notamment un four et, à réception d'une instruction de commande par laquelle l'utilisateur (16) sélectionne cet objet constituant un lien vers des appareils (39), à passer de la page de recette actuelle à une page de commande d'appareil électroménager (42) de l'appareil de cuisson.

6. Dispositif de commande (2) selon la revendication 5, **caractérisé en ce qu'**un bouton de commande (40) est affecté à l'objet constituant un lien vers des appareils ménagers (39) pour l'appareil de cuisson et le module de commande (6) est configuré de manière à, après une détection de l'actionnement du bouton de commande (40) en conservant la page affichée instantanément (38), transmettre à l'appareil de cuisson des signaux de commande (10) comprenant des réglages d'appareil de cuisson enregistrés pour la suggestion de recette de cuisine.

7. Dispositif de commande (2) selon l'une des revendications précédentes, **caractérisé en ce qu'**un bouton de commande (37) servant à mettre en marche et/ou éteindre l'appareil électroménager associé à l'objet constituant un lien vers des appareils (39) et/ou à initier un processus de fonctionnement de cet appareil électroménager (3) est affecté à l'objet constituant un lien vers des appareils (39) et le module de commande (6) est configuré de manière à, après une détection de l'actionnement du bouton de commande (37) en conservant la page affichée instantanément (38, 42), transmettre à l'appareil électroménager (3) associé à l'objet constituant un lien vers des appareils (39) des signaux de commande (10) pour mettre en marche et/ou éteindre et/ou initier le processus de fonctionnement.

8. Dispositif de commande (2) selon l'une des revendications précédentes, **caractérisé en ce que** le module de commande (6) est configuré de manière à détecter quels appareils électroménagers (3) sont prêts à fonctionner à l'instant présent, notamment à afficher un objet constituant un lien vers des appareils (39) qui conduit à la page de commande (42) d'un appareil électroménager (3) uniquement lorsque cet appareil électroménager (3) offre une disponibilité opérationnelle et/ou est déjà activé.

9. Dispositif de commande (2) selon l'une des revendications précédentes, **caractérisé en ce que** le module de commande (6) est configuré de manière à fournir un lien direct entre des paires déterminées de pages de commande d'appareil électroménager (42).

10. Dispositif de commande (2) selon l'une des revendications précédentes, **caractérisé en ce que** le module de commande (6) est configuré de manière à fournir, au moyen d'objets constituant un lien vers des appareils (39), un lien direct entre une machine à laver et un sèche-linge, entre une cuisinière et une hotte d'aspiration et/ou entre une page de recette et un four.

11. Dispositif de commande (2) selon l'une des revendications précédentes, **caractérisé en ce que** le dispositif de commande portable (2) est conçu sous forme d'un terminal de communication mobile, notamment sous forme d'un téléphone mobile ou d'une tablette PC.

12. Système (1) comprenant au moins un premier et un second appareils électroménagers (3) et un dispositif de commande (2) portable selon l'une des revendications précédentes.

13. Procédé de commande à distance d'appareils électroménagers (3) au moyen d'un dispositif de commande portable (2) comprenant un dispositif d'affichage tactile (4) et un module de commande (6) qui pilote le dispositif d'affichage (4) et reçoit des instructions de commande entrées par un utilisateur (16) sur le dispositif d'affichage (4) tactile, dans lequel un moyen de communication (7) du dispositif de commande (2) communique sans fil avec les appareils électroménagers (3), dans lequel le module de commande (6) pilote le dispositif d'affichage (4) pour afficher une interface utilisateur (8) graphique servant à commander les appareils électroménagers (3) et transmet, en fonction des instructions de commande de l'utilisateur (16) entrées par le biais de l'interface utilisateur (8), des signaux de commande (10) aux appareils ménagers (3) via le moyen de communication (7), reçoit des signaux d'état (9) venant des appareils ménagers (3) et les visualise via l'interface utilisateur (8), dans lequel l'interface utilisateur (8) comprend une pluralité de pages de commande d'appareil électroménager (42) sélectionnables séparément pour commander respectivement un appareil électroménager (3) associé, dans lequel le module de commande affiche des objets graphiques d'appareil électroménager (18, 19) dans un menu de sélection d'appareil électroménager (17) de l'interface utilisateur (8), qui sont reliés respectivement à une page de commande (42) d'appareil électroménager associée, et affiche, à réception d'une instruction de commande de sélection de l'objet d'appareil électroménager (18, 19) par l'utilisateur (16), la page de commande (42) associée à l'appareil électroménager sélectionné (3), et dans lequel le module de commande (6) fournit, sur la page de commande (42) d'au moins un appareil électroménager (3) et/ou sur une page (38) d'une catégorie de thèmes différente des pages de commande (42) d'appareil électroménager, un objet graphique constituant un lien vers des appareils (39), et, à réception d'une instruction de commande de sélection de l'objet constituant un lien vers des appareils (39) par l'utilisateur (16), passe de la page affichée instantanément (38) à une page de commande d'appareil électroménager (42) d'un appareil électroménager (3) définie par l'objet constituant un lien vers des appareils électroménagers (39),
**caractérisé en ce que** les instructions de commande reçues sont enregistrées dans une mémoire et le au moins un objet constituant un lien vers des appareils (39) et/ou au moins un objet servant de lien (36) pour une page (38) d'une catégorie de thèmes différente des pages de commande d'appareil électroménager (42) sont fournis en fonction d'un historique des instructions de commande.

14. Produit de programme informatique comportant un support de mémoire sur lequel un programme informatique est stocké, qui est conçu pour faire exécuter un procédé selon la revendication 13 par un module de commande (6) d'un dispositif de commande (2) portable.
